# EUROPEAN PATENT SPECIFICATION

(11) **EP 4 292 238 B1**
(45) Date of publication and mention of the grant of the patent: **01.07.2026**
(21) Application number: 22704959.0
(22) Date of filing: 08.02.2022
(51) Int. Cl.: H04L 9/08, H04L 9/00, H04W 12/04, H04W 12/06

(54) **PROVISIONING SERVER SELECTION IN A CELLULAR NETWORK**
BEREITSTELLUNG EINER SERVERAUSWAHL IN EINEM MOBILFUNKNETZ
SÉLECTION D'UN SERVEUR D'APPROVISIONNEMENT DANS UN RÉSEAU CELLULAIRE

(30) Priority: 11.02.2021 US 202163148187 P
(43) Date of publication of application: 20.12.2023
(73) Proprietor: Lenovo (Singapore) Pte. Ltd., Singapore 556741 (SG)
(72) Inventor: KUNZ, Andreas, 68526 Ladenburg (DE); BASKARAN, Sheeba Backia Mary, 61381 Friedrichsdorf (DE); VELEV, Genadi, 64291 Darmstadt (DE)
(74) Representative: Marks & Clerk LLP
(86) International application number: PCT/IB2022/051133
(87) International publication number: WO 2022/172159

(56) References cited:
- "3rd Generation Partnership Project; Technical Specification Group Services and System Aspects; Study on enhanced security support for Non-Public Networks; (NPN); (Release 17)", 5 February 2021 (2021-02-05), XP052171311, Retrieved from the Internet <URL:https://ftp.3gpp.org/tsg_sa/WG3_Security/TSGS3_102e/Docs/S3-210780.zip S3-210780-draft_TR_33857-040_cl.docx> [retrieved on 20210205]
- "3rd Generation Partnership Project; Technical Specification Group Services and System Aspects; Study on enhanced support of non-public networks (Release 17)", no. V0.4.0, 19 June 2020 (2020-06-19), pages 1 - 158, XP051924077, Retrieved from the Internet <URL:ftp://ftp.3gpp.org/Specs/archive/23_series/23.700-07/23700-07-040.zip 23700-07-040_rm.docx> [retrieved on 20200619]

## Description

### FIELD

The subject matter disclosed herein relates generally to wireless communications and more particularly relates to provisioning server selection in a cellular network.

### BACKGROUND

In certain wireless communications networks, security credentials may be used. In such networks, the credentials may not be sufficiently protected. TR23.700-07-040 describes a procedure for onboarding a device into a Subscription Owner Standalone Non-Public Network (SO-SNPN). TR33.857-040 describes onboarding of a device om a SNPN.

### BRIEF SUMMARY

Methods for provisioning server selection in a cellular network are disclosed. Apparatuses and systems also perform the functions of the methods. One embodiment of a method includes communicating, at a network device, with a remote unit via a first network function. In some embodiments, the method includes receiving an authentication request from the first network function. In certain embodiments, the method includes selecting a provisioning server based on a remote unit identity of an onboarding profile, based on a pre-configuration, or a combination thereof. In various embodiments, the method includes transmitting a response message to the first network function. The response message includes a provisioning server address.

One apparatus for provisioning server selection in a cellular network includes a network device, the network device comprising a Default Credential Server (DCS). In some embodiments, the network device includes at least one memory and at least one processor coupled with the at least one memory. The processor is configured to cause the network device to communicate with a User Equipment (UE) via a first network function comprising an Authentication Server Function (AUSF). In various embodiments, the processor is configured to cause the network device to receive an authentication request from the first network function. In certain embodiments, the processor is configured to cause the network device to select a provisioning server based on a remote unit identity of an onboarding profile, based on a pre-configuration, or a combination thereof, and to transmit a response message to the first network function for forwarding to the UE via a second network function comprising an Access and Mobility Management Function. The response message includes an address of the provisioning server.

Another embodiment of a method for provisioning server selection in a cellular network includes communicating, at a UE, with a first network function. In some embodiments, the method includes receiving a registration accept message including a provisioning server address. In certain embodiments, the method includes deriving a provisioning key (K_{Pro}) from a master session key (MSK) taking a permanent equipment identifier (PEI) of the remote unit as an input to a key derivation function (KDF).

Another apparatus for provisioning server selection in a cellular network includes a UE. In some embodiments, the apparatus includes a transmitter that communicates with a first network function. In various embodiments, the apparatus includes a receiver that receives a registration accept message including a provisioning server address. In certain embodiments, the apparatus includes a processor that derives a provisioning key (K_{Pro}) from a master session key (MSK) taking a permanent equipment identifier (PEI) of the apparatus as an input to a key derivation function (KDF).

Further features and embodiments are set out in the accompanying claims.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a wireless communication system for provisioning server selection in a cellular network;
Figure 2 is a schematic block diagram illustrating one embodiment of an apparatus that may be used for provisioning server selection in a cellular network;
Figure 3 is a schematic block diagram illustrating one embodiment of an apparatus that may be used for provisioning server selection in a cellular network;
Figure 4 is a schematic block diagram illustrating one embodiment of a system for network access authentication with credentials owned by an entity separate from an SNPN;
Figure 5 is a flow chart diagram illustrating one embodiment of a method for provisioning server selection in a cellular network; and
Figure 6 is a flow chart diagram illustrating another embodiment of a method for provisioning server selection in a cellular network.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. **In** a certain embodiment, the storage devices only employ signals for accessing code.

Certain of the functional units described in this specification may be labeled as modules, in order to more particularly emphasize their implementation independence. For example, a module may be implemented as a hardware circuit comprising custom very-large-scale integration ("VLSI") circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but may include disparate instructions stored in different locations which, when joined logically together, include the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Code for carrying out operations for embodiments may be any number of lines and may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider).

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. The code may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. **In** this regard, each block in the schematic flowchart diagrams and/or schematic block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

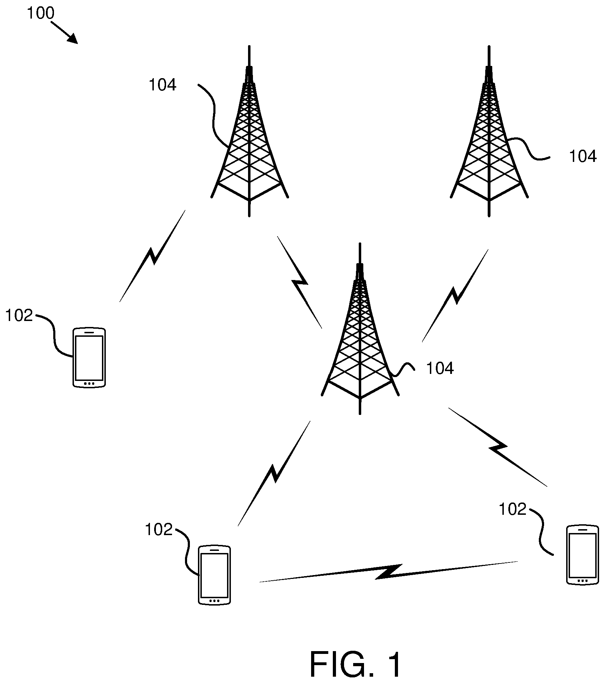

Figure 1 depicts an embodiment of a wireless communication system 100 for provisioning server selection in a cellular network. In one embodiment, the wireless communication system 100 includes remote units 102 and network units 104. Even though a specific number of remote units 102 and network units 104 are depicted in Figure 1, one of skill in the art will recognize that any number of remote units 102 and network units 104 may be included in the wireless communication system 100.

In one embodiment, the remote units 102 may include computing devices, such as desktop computers, laptop computers, personal digital assistants ("PDAs"), tablet computers, smart phones, smart televisions (e.g., televisions connected to the Internet), set-top boxes, game consoles, security systems (including security cameras), vehicle on-board computers, network devices (e.g., routers, switches, modems), aerial vehicles, drones, or the like. In some embodiments, the remote units 102 include wearable devices, such as smart watches, fitness bands, optical head-mounted displays, or the like. Moreover, the remote units 102 may be referred to as subscriber units, mobiles, mobile stations, users, terminals, mobile terminals, fixed terminals, subscriber stations, UE, user terminals, a device, or by other terminology used in the art. The remote units 102 may communicate directly with one or more of the network units 104 via UL communication signals. In certain embodiments, the remote units 102 may communicate directly with other remote units 102 via sidelink communication.

The network units 104 may be distributed over a geographic region. In certain embodiments, a network unit 104 may also be referred to and/or may include one or more of an access point, an access terminal, a base, a base station, a location server, a core network ("CN"), a radio network entity, a Node-B, an evolved node-B ("eNB"), a 5G node-B ("gNB"), a Home Node-B, a relay node, a device, a core network, an aerial server, a radio access node, an access point ("AP"), new radio ("NR"), a network entity, an access and mobility management function ("AMF"), a unified data management ("UDM"), a unified data repository ("UDR"), a UDM/UDR, a policy control function ("PCF"), a radio access network ("RAN"), a network slice selection function ("NSSF"), an operations, administration, and management ("OAM"), a session management function ("SMF"), a user plane function ("UPF"), an application function, an authentication server function ("AUSF"), security anchor functionality ("SEAF"), trusted non-3GPP gateway function ("TNGF"), or by any other terminology used in the art. The network units 104 are generally part of a radio access network that includes one or more controllers communicably coupled to one or more corresponding network units 104. The radio access network is generally communicably coupled to one or more core networks, which may be coupled to other networks, like the Internet and public switched telephone networks, among other networks. These and other elements of radio access and core networks are not illustrated but are well known generally by those having ordinary skill in the art.

In one implementation, the wireless communication system 100 is compliant with NR protocols standardized in third generation partnership project ("3GPP"), wherein the network unit 104 transmits using an OFDM modulation scheme on the downlink ("DL") and the remote units 102 transmit on the uplink ("UL") using a single-carrier frequency division multiple access ("SC-FDMA") scheme or an orthogonal frequency division multiplexing ("OFDM") scheme. More generally, however, the wireless communication system 100 may implement some other open or proprietary communication protocol, for example, WiMAX, institute of electrical and electronics engineers ("IEEE") 802.11 variants, global system for mobile communications ("GSM"), general packet radio service ("GPRS"), universal mobile telecommunications system ("UMTS"), long term evolution ("LTE") variants, code division multiple access 2000 ("CDMA2000"), Bluetooth^{®}, ZigBee, Sigfoxx, among other protocols. The present disclosure is not intended to be limited to the implementation of any particular wireless communication system architecture or protocol.

The network units 104 may serve a number of remote units 102 within a serving area, for example, a cell or a cell sector via a wireless communication link. The network units 104 transmit DL communication signals to serve the remote units 102 in the time, frequency, and/or spatial domain.

In various embodiments, a remote unit 102 may communicate with a first network function. In some embodiments, the remote unit 102 may receive a registration accept message including a provisioning server address. In certain embodiments, the remote unit 102 may derive a provisioning key (K_{Pro} from a master session key (MSK) taking a permanent equipment identifier (PEI) of the remote unit as an input to a key derivation function (KDF). Accordingly, the remote unit 102 may be used for provisioning server selection in a cellular network.

In certain embodiments, a network unit 104 may communicate with a remote unit via a first network function. In some embodiments, the network unit 104 may receive an authentication request from the first network function. In certain embodiments, the network unit 104 may select a provisioning server based on a remote unit identity of an onboarding profile, based on a pre-configuration, or a combination thereof. In various embodiments, the network unit 104 may transmit a response message to the first network function. The response message includes a provisioning server address. Accordingly, the network unit 104 may be used for provisioning server selection in a cellular network.

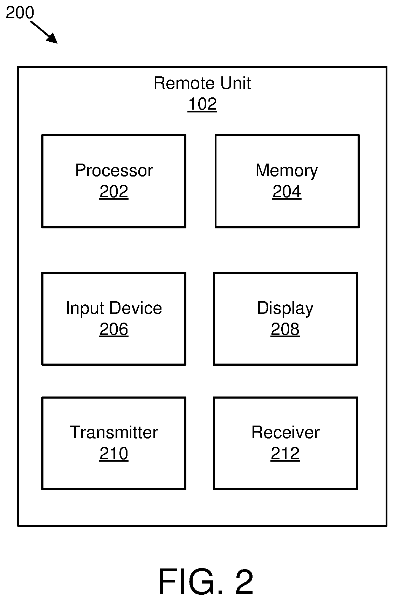

Figure 2 depicts one embodiment of an apparatus 200 that may be used for provisioning server selection in a cellular network. The apparatus 200 includes one embodiment of the remote unit 102. Furthermore, the remote unit 102 may include a processor 202, a memory 204, an input device 206, a display 208, a transmitter 210, and a receiver 212. In some embodiments, the input device 206 and the display 208 are combined into a single device, such as a touchscreen. In certain embodiments, the remote unit 102 may not include any input device 206 and/or display 208. In various embodiments, the remote unit 102 may include one or more of the processor 202, the memory 204, the transmitter 210, and the receiver 212, and may not include the input device 206 and/or the display 208.

The processor 202, in one embodiment, may include any known controller capable of executing computer-readable instructions and/or capable of performing logical operations. For example, the processor 202 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 202 executes instructions stored in the memory 204 to perform the methods and routines described herein. The processor 202 is communicatively coupled to the memory 204, the input device 206, the display 208, the transmitter 210, and the receiver 212.

The memory 204, in one embodiment, is a computer readable storage medium. In some embodiments, the memory 204 includes volatile computer storage media. For example, the memory 204 may include a RAM, including dynamic RAM ("DRAM"), synchronous dynamic RAM ("SDRAM"), and/or static RAM ("SRAM"). In some embodiments, the memory 204 includes non-volatile computer storage media. For example, the memory 204 may include a hard disk drive, a flash memory, or any other suitable non-volatile computer storage device. In some embodiments, the memory 204 includes both volatile and non-volatile computer storage media. In some embodiments, the memory 204 also stores program code and related data, such as an operating system or other controller algorithms operating on the remote unit 102.

The input device 206, in one embodiment, may include any known computer input device including a touch panel, a button, a keyboard, a stylus, a microphone, or the like. In some embodiments, the input device 206 may be integrated with the display 208, for example, as a touchscreen or similar touch-sensitive display. In some embodiments, the input device 206 includes a touchscreen such that text may be input using a virtual keyboard displayed on the touchscreen and/or by handwriting on the touchscreen. In some embodiments, the input device 206 includes two or more different devices, such as a keyboard and a touch panel.

The display 208, in one embodiment, may include any known electronically controllable display or display device. The display 208 may be designed to output visual, audible, and/or haptic signals. In some embodiments, the display 208 includes an electronic display capable of outputting visual data to a user. For example, the display 208 may include, but is not limited to, a liquid crystal display ("LCD"), a light emitting diode ("LED") display, an organic light emitting diode ("OLED") display, a projector, or similar display device capable of outputting images, text, or the like to a user. As another, non-limiting, example, the display 208 may include a wearable display such as a smart watch, smart glasses, a heads-up display, or the like. Further, the display 208 may be a component of a smart phone, a personal digital assistant, a television, a table computer, a notebook (laptop) computer, a personal computer, a vehicle dashboard, or the like.

In certain embodiments, the display 208 includes one or more speakers for producing sound. For example, the display 208 may produce an audible alert or notification (e.g., a beep or chime). In some embodiments, the display 208 includes one or more haptic devices for producing vibrations, motion, or other haptic feedback. In some embodiments, all or portions of the display 208 may be integrated with the input device 206. For example, the input device 206 and display 208 may form a touchscreen or similar touch-sensitive display. In other embodiments, the display 208 may be located near the input device 206.

In certain embodiments, the transmitter 210 communicates with a first network function. In various embodiments, the receiver 212 receives a registration accept message including a provisioning server address. In certain embodiments, the processor 202 derives a provisioning key (K_{Pro}) from a master session key (MSK) taking a permanent equipment identifier (PEI) of the apparatus as an input to a key derivation function (KDF).

Although only one transmitter 210 and one receiver 212 are illustrated, the remote unit 102 may have any suitable number of transmitters 210 and receivers 212. The transmitter 210 and the receiver 212 may be any suitable type of transmitters and receivers. In one embodiment, the transmitter 210 and the receiver 212 may be part of a transceiver.

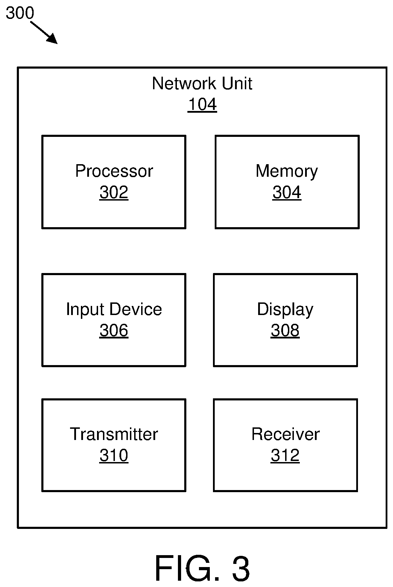

Figure 3 depicts one embodiment of an apparatus 300 that may be used for provisioning server selection in a cellular network. The apparatus 300 includes one embodiment of the network unit 104. Furthermore, the network unit 104 may include a processor 302, a memory 304, an input device 306, a display 308, a transmitter 310, and a receiver 312. As may be appreciated, the processor 302, the memory 304, the input device 306, the display 308, the transmitter 310, and the receiver 312 may be substantially similar to the processor 202, the memory 204, the input device 206, the display 208, the transmitter 210, and the receiver 212 of the remote unit 102, respectively.

In certain embodiments, the transmitter 310 communicates with a remote unit via a first network function. In various embodiments, the receiver 312 receives an authentication request from the first network function. In certain embodiments, the processor 302 selects a provisioning server based on a remote unit identity of an onboarding profile, based on a pre-configuration, or a combination thereof. The transmitter 310 transmits a response message to the first network function. The response message includes a provisioning server address.

In certain embodiments, a user equipment ("UE") may onboard at a special default credential server ("DCS") with default credentials and afterwards the UE gets provisioned with a real profile. The UE uses the real profile to access a non-public network ("NPN") according to the profile subscription.

In some embodiments, access for onboarding may be protected and not performed unprotected (e.g., like an emergency service). In such embodiments, the UE may be pre-provisioned with onboarding credentials for an onboarding a stand-alone NPN ("SNPN"). Further the credentials (e.g., the profile to be provisioned) may be confidentiality protected, integrity protected, and/or replay protected during remote provisioning.

In various embodiments, pre-provisioned onboarding credentials between a UE and a DCS is used to derive keys to protect profile provisioning later between the UE and a provisioning server.

In certain embodiments, a UE is pre-provisioned with onboarding credentials. In such embodiments, the UE is identified by a DCS based on an onboarding subscription concealed identifier ("SUCI"). The DCS may de-conceal the SUCI to an onboarding subscription permanent identifier ("SUPI") and may have knowledge about a corresponding permanent equipment identifier ("PEI") of the UE. The DCS may authenticate the UE based on the onboarding credentials and provision a master session key ("MSK") to an authentication server function ("AUSF") for setting up the security over the radio interface for access stratum ("AS") and non-access stratum ("NAS") per normal procedures. The DCS and the UE may derive a provisioning key which is used to protect the profile from the provisioning server.

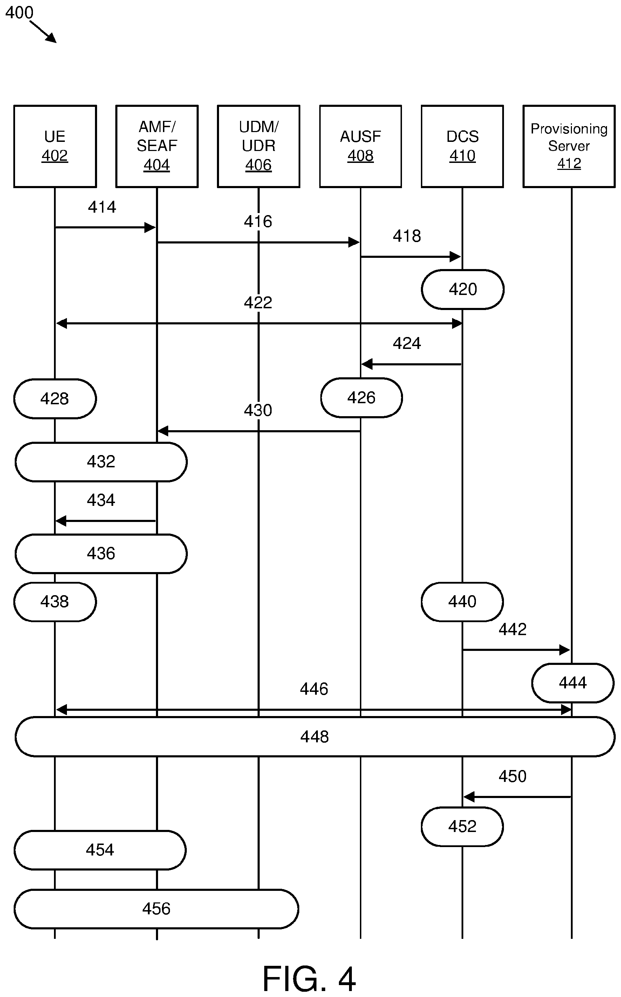

Figure 4 is a schematic block diagram illustrating one embodiment of a system 400 for network access authentication with credentials owned by an entity separate from an SNPN. The system 400 includes a UE 402, an AMF and/or security anchor function ("SEAF") ("AMF/SEAF") 404, a UDM/UDR 406, an AUSF 408, a DCS 410, and a provisioning server 412. Each of the communications of the system 400 may include one or more messages.

In a first communication 414, the UE 402 sends a registration request message with an onboarding SUCI of the DCS 410 as the UE 402 identity to the AMF/SEAF 404.

In a second communication 416, the AMF/SEAF 404 detects, based on the realm of a network access identifier ("NAI"), that the registration request message is not from a subscriber of the SNPN but for onboarding at the DCS 410. The AMF/SEAF 404 authorizes the request by verifying the realm of the NAI and whether the SNPN has an active agreement with this DCS 410. The AMF/SEAF 404 forwards the request to the AUSF 408 which may be preconfigured for handling requests transmitted towards an external DCS 410.

In a third communication 418, the AUSF 408 may perform authorization of the registration request by verifying the realm of the NAI and whether the SNPN has an active agreement with this DCS 410. The AUSF 408 identifies the DCS 410 and takes the role of an authentication, authorization, and accounting ("AAA") proxy ("AAA-Proxy") and sends a related AAA message to the DCS 410. The AUSF 408 sends an authentication request with the onboarding SUCI to the DCS 410. The AUSF 408 may include an SNPN ID, a closed access group ("CAG") ID, and/or serving network name in the authentication request. It should be noted that, if the DCS 410 supports only DIAMETER or RADIUS protocols, the SBI-DIAMETER interworking functionality may be collocated with the AUSF 408 or the DCS 410, or may be in an additional functionality.

The DCS 410 de-conceals 420 the SUCI to a SUPI and verifies the authentication request based on the username. The DCS 410 selects the subscriber profile based on the SUPI and, in a fourth communication 422, performs an extensible authentication protocol ("EAP") based authentication with the UE 402, using the pre-shared onboarding credentials in the UE 402 and in the DCS 410. The DCS 410 may select the provisioning server 412 based on the onboarding SUPI or a stored preconfigured provisioning server in the onboarding profile. The provisioning server 412 address may be a NAI, fully qualified domain name ("FQDN") or an internet protocol ("IP") address of the provisioning server 412.

In a fifth communication 424, after successful authentication, the DCS 410 sends the result of the authentication, the onboarding SUPI, the MSK, and/or the validity time and address of the provisioning server 412 back in an authentication response to the AUSF 408.

The AUSF 408 verifies 426 the response and derives the K_{AUSF} from the MSK and the K_{SEAF}. The UE 402 is performing 428 the same key derivation accordingly.

In a sixth communication 430, the AUSF 408 sends an authentication response to the AMF/SEAF 404 including the authentication result from the DCS 410 and the K_{SEAF}, the onboarding SUPI, and/or the validity time (e.g., time until the onboarding expires and the address of the provisioning server 412).

In a seventh communication 432, the AMF/SEAF 404 performs an NAS security mode command ("SMC") with the UE 402.

In an eighth communication 434, after a successful NAS SMC procedure, the AMF/SEAF 404 sends a registration accept message including the address of the provisioning server 412.

In a ninth communication 436, the UE 402 performs a normal protocol data unit ("PDU") session establishment procedure to gain IP connectivity via a UPF. The UE 402 may retrieve the provisioning server 412 address at this point in time from the SMF if it was not provisioned in the NAS Registration Accept message in the eighth communication 434. The UE 402 may have limited UP access only to the provisioning server 412.

The UE 402 and the DCS 410 derive 438 and 440 a provisioning key K_{Pro} in the same way. When deriving a K_{Pro} from MSK or K_{AUSF}, one or more of the following parameters in exchangeable order may be used to form the input S to the KDF: FC = 0xYZ, any hexadecimal value, P0 = <serving network name>, L0 = length of <serving network name>, P1 = <NPN ID>, L1 = length of <NPN ID>, P2 = <CAG ID>, L2 = length of <CAG ID>, P3 = <Onboarding SUPI>, L3 = length of <Onboarding SUPI>, P4 = <Provisioning Server Address>, L4 = length of <Provisioning Server Address>, P5 = <Onboarding SUCI>, L5 = length of <Onboarding SUCI>, P6 = <PEI>, and/or L6 = length of <PEI>. The input key KEY is MSK or the K_{AUSF}, where K_{AUSF} is the most significant 256 bits of the MSK. It should be noted that reasonable inputs may be the onboarding SUPI, PEI, and/or the provisioning server address including their lengths, respectively. The key derivation may take place in the mobile equipment ("ME") or in the universal subscriber identity module ("USIM") of the onboarding profile or in the universal integrated circuit card ("UICC").

In a tenth communication 442, the DCS 410 provides the provisioning information onboarding SUPI and provisioning key K_{Pro} to the provisioning server 412. The selection of the provisioning server 412 may be performed based on the stored address in the DCS 410 per onboarding SUPI. The provisioning server 412 may be collocated with the DCS 410.

The provisioning server 412 selects 444 the profile based on the onboarding SUPI.

In an eleventh communication 446, the UE 402 (or ME) establishes an IPSec security association ("SA") with the provisioning server 412 by using the K_{Pro}. The UICC may initiate the IPSec connection to install the provisioned profile directly as an USIM application. Instead of IPSec, the ME or the UICC may establish a transport layer security ("TLS") connection with the provisioning server 412. The provisioning server 412 may trigger the establishment of the secure connection by contacting the network exposure function ("NEF") with the onboarding SUPI to retrieve the IP address of the UE 402 and to initiate the secure connection (e.g., IPSec or TLS). All messages may then be confidentiality and integrity protected by the IPsec tunnel. The UE 402 may provide its PEI to the provisioning server 412 via the IPSec tunnel if the PEI is not used as input for the K_{Pro} derivation. If the PEI is used as input for the K_{Pro} derivation and onboarding credentials are leaked to a malicious UE, then the K_{Pro} would lead to a mismatch and the provisioning would fail, since the stored PEI in the DCS 410 may not be the same as that of the malicious UE.

In a twelfth communication 448, the provisioning server 412 provisions the new profile to the UE 404 via the IPSec tunnel.

In a thirteenth communication 450, the provisioning server 412 acknowledges the result of the provisioning (e.g., success and/or failure) to the DCS 410. The provisioning server 412 may provide the PEI to the DCS 410, if available.

If the PEI was not used as input to the K_{Pro} derivation, the DCS 410 may verify 452 whether the received PEI from the provisioning server 412 matches the stored PEI of the onboarding SUPI and if they match the DCS 410 may delete or deactivate the onboarding profile that relates to the onboarding SUPI if the provisioning was successful. If the PEI was used as input to the K_{Pro} key derivation, the DCS 410 may deactivate or delete the onboarding profile that relates to the onboarding SUPI if the provisioning was successful. It depends on the local policy in the DCS 410 whether to deactivate or delete the onboarding profile and how to activate or create new onboarding profiles again (e.g., over the top configuration, timer based, etc.). This may prevent, that if onboarding credentials are compromised, succeeding impersonation attacks from malicious UEs from being provisioned with a valid profile.

In a fourteenth communication 454, the UE 402 deregisters from the onboarding network and may delete or deactivate the onboarding profile.

In a fifteenth communication 456, the UE 402 selects the NPN according to the provisioned profile and registers to the NPN using the provisioned profile. The selected NPN may be different or the same as the onboarding NPN.

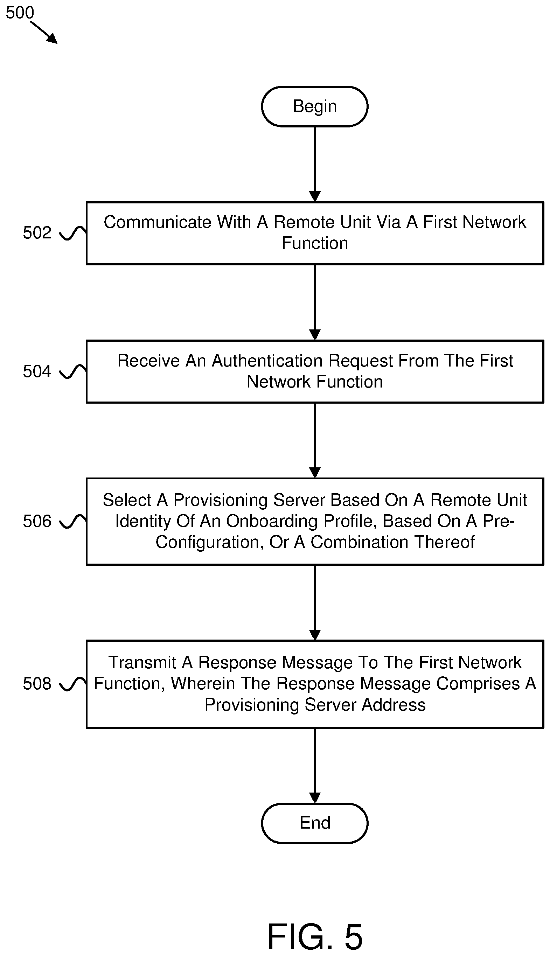

Figure 5 is a flow chart diagram illustrating one embodiment of a method 500 for provisioning server selection in a cellular network. In some embodiments, the method 500 is performed by an apparatus, such as the network unit 104. In certain embodiments, the method 500 may be performed by a processor executing program code, for example, a microcontroller, a microprocessor, a CPU, a GPU, an auxiliary processing unit, a FPGA, or the like.

In various embodiments, the method 500 includes communicating 502 with a remote unit via a first network function. In some embodiments, the method 500 includes receiving 504 an authentication request from the first network function. In certain embodiments, the method 500 includes selecting 506 a provisioning server based on a remote unit identity of an onboarding profile, based on a pre-configuration, or a combination thereof. In various embodiments, the method 500 includes transmitting 508 a response message to the first network function. The response message includes a provisioning server address.

In certain embodiments, the method 500 further comprises deriving a provisioning key (K_{Pro}) from a master session key (MSK) taking a permanent equipment identifier (PEI) of the remote unit as an input to a key derivation function (KDF). In some embodiments, the method 500 further comprises transmitting a provisioning key message to a second network function, wherein the provisioning key message comprises the K_{Pro} and an onboarding subscription permanent identifier (SUPI). In various embodiments, the method 500 further comprises receiving a response message from the second network function based on transmitting the provisioning key message.

In one embodiment, the method 500 further comprises verifying a successful provisioning and deactivates or deletes an onboarding profile related to the onboarding SUPI. In certain embodiments, the network device comprises a default credential server (DCS). In some embodiments, the remote unit comprises a user equipment.

In various embodiments, the first network function comprises an authentication server function (AUSF). In one embodiment, the second network function comprises a provisioning server.

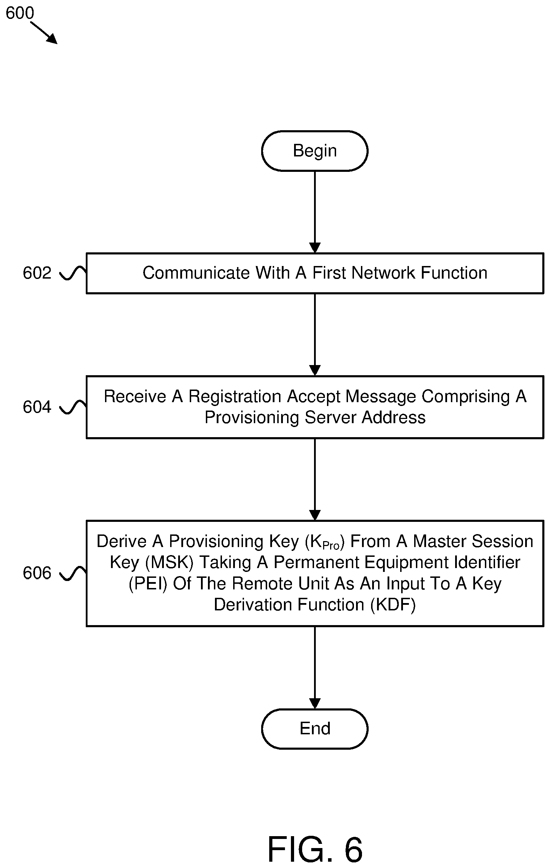

Figure 6 is a flow chart diagram illustrating another embodiment of a method 600 for provisioning server selection in a cellular network. In some embodiments, the method 600 is performed by an apparatus, such as the remote unit 102. In certain embodiments, the method 600 may be performed by a processor executing program code, for example, a microcontroller, a microprocessor, a CPU, a GPU, an auxiliary processing unit, a FPGA, or the like.

In various embodiments, the method 600 includes communicating 602 with a first network function. In some embodiments, the method 600 includes receiving 604 a registration accept message including a provisioning server address. In certain embodiments, the method 600 includes deriving 606 a provisioning key (K_{Pro}) from a master session key (MSK) taking a permanent equipment identifier (PEI) of the remote unit as an input to a key derivation function (KDF).

In certain embodiments, the method 600 further comprises communicating with a second network function to setup an internet protocol (IP) security (IPSec) tunnel using the K_{Pro}. In some embodiments, the second network function comprises a provisioning server. In various embodiments, the remote unit comprises a user equipment (UE).

In one embodiment, the first network function comprises an access and mobility management function. In certain embodiments, the method 600 further comprises transmitting a registration request message prior to receiving the registration accept message.

In one embodiment, an apparatus comprises a network device. The apparatus further comprises: a transmitter that communicates with a remote unit via a first network function; a receiver that receives an authentication request from the first network function; and a processor that selects a provisioning server based on a remote unit identity of an onboarding profile, based on a pre-configuration, or a combination thereof, wherein the transmitter transmits a response message to the first network function, wherein the response message comprises a provisioning server address.

In certain embodiments, the processor derives a provisioning key (K_{Pro}) from a master session key (MSK) taking a permanent equipment identifier (PEI) of the remote unit as an input to a key derivation function (KDF).

In some embodiments, the transmitter transmits a provisioning key message to a second network function, wherein the provisioning key message comprises the K_{Pro} and an onboarding subscription permanent identifier (SUPI).

In various embodiments, the receiver receives a response message from the second network function based on transmitting the provisioning key message.

In one embodiment, the processor verifies a successful provisioning and deactivates or deletes an onboarding profile related to the onboarding SUPI.

In certain embodiments, the network device comprises a default credential server (DCS).

In some embodiments, the remote unit comprises a user equipment.

In various embodiments, the first network function comprises an authentication server function (AUSF).

In one embodiment, the second network function comprises a provisioning server.

In one embodiment, a method a network device comprises: communicating with a remote unit via a first network function; receiving an authentication request from the first network function; selecting a provisioning server based on a remote unit identity of an onboarding profile, based on a pre-configuration, or a combination thereof; and transmitting a response message to the first network function, wherein the response message comprises a provisioning server address.

In certain embodiments, the method further comprises deriving a provisioning key (K_{Pro}) from a master session key (MSK) taking a permanent equipment identifier (PEI) of the remote unit as an input to a key derivation function (KDF).

In some embodiments, the method further comprises transmitting a provisioning key message to a second network function, wherein the provisioning key message comprises the K_{Pro} and an onboarding subscription permanent identifier (SUPI).

In various embodiments, the method further comprises receiving a response message from the second network function based on transmitting the provisioning key message.

In one embodiment, the method further comprises verifying a successful provisioning and deactivates or deletes an onboarding profile related to the onboarding SUPI.

In certain embodiments, the network device comprises a default credential server (DCS).

In some embodiments, the remote unit comprises a user equipment.

In various embodiments, the first network function comprises an authentication server function (AUSF).

In one embodiment, the second network function comprises a provisioning server.

In one embodiment, an apparatus comprises a remote unit. The apparatus further comprises: a transmitter that communicates with a first network function; a receiver that receives a registration accept message comprising a provisioning server address; and a processor that derives a provisioning key (K_{Pro}) from a master session key (MSK) taking a permanent equipment identifier (PEI) of the apparatus as an input to a key derivation function (KDF).

In certain embodiments, the transmitter communicates with a second network function to setup an internet protocol (IP) security (IPSec) tunnel using the K_{Pro}.

In some embodiments, the second network function comprises a provisioning server.

In various embodiments, the remote unit comprises a user equipment (UE).

In one embodiment, the first network function comprises an access and mobility management function.

In certain embodiments, the transmitter transmits a registration request message prior to receiving the registration accept message.

In one embodiment, a method of a remote unit comprises: communicating with a first network function; receiving a registration accept message comprising a provisioning server address; and deriving a provisioning key (K_{Pro}) from a master session key (MSK) taking a permanent equipment identifier (PEI) of the remote unit as an input to a key derivation function (KDF).

In certain embodiments, the method further comprises communicating with a second network function to setup an internet protocol (IP) security (IPSec) tunnel using the K_{Pro}.

In some embodiments, the second network function comprises a provisioning server.

In various embodiments, the remote unit comprises a user equipment (UE).

In one embodiment, the first network function comprises an access and mobility management function.

In certain embodiments, the method further comprises transmitting a registration request message prior to receiving the registration accept message.

Embodiments may be practiced in other specific forms. The described embodiments are to be considered in all respects only as illustrative and not restrictive. The scope of the invention is, therefore, indicated by the appended claims rather than by the foregoing description.

## Claims

1. A network device, comprising:
at least one memory; and
at least one processor coupled with the at least one memory and configured to cause the network device to:
communicate with a User Equipment, UE, via a first network function comprising an Authentication Server Function (AUSF);
receive an authentication request from the first network function;
select a provisioning server based on one or more of a UE identity of an onboarding profile or a pre-configuration; and
transmit a response message to the first network function for forwarding to the UE via a second network function comprising an Access and Mobility Management Function, wherein the response message comprises an address of the provisioning server;
wherein the network device comprises a Default Credential Server (DCS) and is configured to operate in association with a Standalone Non-Public Network (SNPN).

2. The network device of claim 1, wherein the at least one processor is configured to cause the network device to derive a provisioning key (K_{Pro}) according to a key derivation function (KDF), wherein a master session key (MSK) and a permanent equipment identifier (PEI) of the UE comprise inputs to the KDF.

3. The network device of claim 2, wherein the at least one processor is configured to cause the network device to transmit a provisioning key message to the provisioning server, wherein the provisioning key message comprises the K_{Pro} and an onboarding subscription permanent identifier (SUPI).

4. The network device of claim 3, wherein the at least one processor is configured to cause the network device to receive a response message from the provisioning server based on the provisioning key message.

5. The network device of claim 4, wherein the at least one processor is configured to cause the network device to
verify a successful provisioning; and
deactivate or delete an onboarding profile related to the onboarding SUPI.

6. A method of a network device, the network device comprising a Default Credential Server (DCS) configured to operate in association with a Standalone Non-Public Network (SNPN), the method comprising:
communicating with a UE via a first network function comprising an Authentication Server Function (AUSF);
receiving an authentication request from the first network function;
selecting a provisioning server based on one or more of a UE identity of an onboarding profile or a pre-configuration; and
transmitting a response message to the first network function for forwarding to the UE via a second network function comprising an Access and Mobility Management Function (AMF), wherein the response message comprises an address of the provisioning server.

7. A UE configured to operate in association with a Standalone Non-Public Network (SNPN), comprising:
at least one memory; and
at least one processor coupled with the at least one memory and configured to cause the UE to:
communicate with a first network function;
receive from an Access and Mobility Management Function a registration accept message comprising a provisioning server address; and
derive a provisioning key (K_{Pro}) according to a KDF, wherein an MSK and a PEI of the UE comprise inputs to the KDF.

8. The UE of claim 7, wherein the at least one processor is configured to cause the UE to communicate with a second network function to setup an internet protocol (IP) security (IPSec) tunnel using the K_{Pro}, wherein the second network function comprises a provisioning server.

9. The UE of claim 7 or 8, wherein the first network function comprises an access and mobility management function.

10. The UE of claim 7, 8 or 9, wherein the at least one processor is configured to cause the UE to transmit a registration request message prior to receiving the registration accept message.

## Patentansprüche

1. Netzwerkvorrichtung, umfassend:
mindestens einen Speicher; und
mindestens einen Prozessor, der mit dem mindestens einen Speicher gekoppelt und konfiguriert ist, um die Netzwerkvorrichtung zu veranlassen zum:
Kommunizieren mit einer Benutzerausrüstung, UE, über eine erste Netzwerkfunktion, die eine Authentifizierungsserverfunktion (AUSF) umfasst;
Empfangen einer Authentifizierungsanfrage von der ersten Netzwerkfunktion;
Auswählen eines Bereitstellungsservers auf der Grundlage einer oder mehrerer von einer UE-Identität eines Onboarding-Profils oder einer Vorkonfiguration; und
Übermitteln einer Antwortnachricht an die erste Netzwerkfunktion zur Weiterleitung an die UE über eine zweite Netzwerkfunktion, die eine Zugangs- und Mobilitätsverwaltungsfunktion umfasst, wobei die Antwortnachricht eine Adresse des Bereitstellungsservers umfasst;
wobei die Netzwerkvorrichtung einen Standardberechtigungsserver (DCS) umfasst und so konfiguriert ist, dass sie in Zuordnung zu einem eigenständigen nicht-öffentlichen Netzwerk (SNPN) arbeitet.

2. Netzwerkvorrichtung nach Anspruch 1, wobei der mindestens eine Prozessor konfiguriert ist, um die Netzwerkvorrichtung zu veranlassen, einen Bereitstellungsschlüssel (K_{Pro}) gemäß einer Schlüsselableitungsfunktion (KDF) abzuleiten, wobei ein Hauptsitzungsschlüssel (MSK) und eine permanente Gerätekennung (PEI) der UE Eingaben für die KDF umfassen.

3. Netzwerkvorrichtung nach Anspruch 2, wobei der mindestens eine Prozessor konfiguriert ist, um die Netzwerkvorrichtung zu veranlassen, eine Bereitstellungsschlüsselnachricht an den Bereitstellungsserver zu übermitteln, wobei die Bereitstellungsschlüsselnachricht die K_{Pro} und eine permanente Onboarding-Abonnementkennung (SUPI) umfasst.

4. Netzwerkvorrichtung nach Anspruch 3, wobei der mindestens eine Prozessor konfiguriert ist, um die Netzwerkvorrichtung zu veranlassen, eine Antwortnachricht von dem Bereitstellungsserver auf der Grundlage der Bereitstellungsschlüsselnachricht zu empfangen.

5. Netzwerkvorrichtung nach Anspruch 4, wobei der mindestens eine Prozessor konfiguriert ist, um die Netzwerkvorrichtung zu veranlassen zum
Überprüfen einer erfolgreichen Bereitstellung; und
Deaktivieren oder Löschen eines Onboarding-Profils, das mit der Onboarding-SUPI verknüpft ist.

6. Verfahren einer Netzwerkvorrichtung, wobei die Netzwerkvorrichtung einen Standardberechtigungsserver (DCS) umfasst, der konfiguriert ist, um in Verbindung mit einem eigenständigen nicht-öffentlichen Netzwerk (SNPN) zu arbeiten, wobei das Verfahren umfasst:
Kommunizieren mit einer UE über eine erste Netzwerkfunktion, die eine Authentifizierungsserverfunktion (AUSF) umfasst;
Empfangen einer Authentifizierungsanfrage von der ersten Netzwerkfunktion;
Auswählen eines Bereitstellungsservers auf der Grundlage einer oder mehrerer von einer UE-Identität eines Onboarding-Profils oder einer Vorkonfiguration; und
Übermitteln einer Antwortnachricht an die erste Netzwerkfunktion zur Weiterleitung an die UE über eine zweite Netzwerkfunktion, die eine Zugangs- und Mobilitätsverwaltungsfunktion (AMF) umfasst, wobei die Antwortnachricht eine Adresse des Bereitstellungsservers umfasst.

7. UE, die so konfiguriert ist, dass sie in Zuordnung zu einem eigenständigen nicht-öffentlichen Netzwerk (SNPN) arbeitet, umfassend:
mindestens einen Speicher; und
mindestens einen Prozessor, der mit dem mindestens einen Speicher gekoppelt und konfiguriert ist, um die UE zu veranlassen zum:
Kommunizieren mit einer ersten Netzwerkfunktion;
Empfangen einer Registrierungsbestätigungsnachricht, die eine Bereitstellungsserveradresse umfasst, von einer Zugangs- und Mobilitätsverwaltungsfunktion; und
Ableiten eines Bereitstellungsschlüssels (K_{Pro}) gemäß einer KDF, wobei ein MSK und eine PEI der UE Eingaben in die KDF umfassen.

8. UE nach Anspruch 7, wobei der mindestens eine Prozessor konfiguriert ist, um die UE zu veranlassen, mit einer zweiten Netzwerkfunktion zu kommunizieren, um einen Internetprotokoll-(IP)-Sicherheits-(IPSec)-Tunnel unter Verwendung von K_{Pro} aufzubauen, wobei die zweite Netzwerkfunktion einen Bereitstellungsserver umfasst.

9. UE nach Anspruch 7 oder 8, wobei die erste Netzwerkfunktion eine Zugangs- und Mobilitätsverwaltungsfunktion umfasst.

10. UE nach Anspruch 7, 8 oder 9, wobei der mindestens eine Prozessor konfiguriert ist, um die UE zu veranlassen, eine Registrierungsanforderungsnachricht vor dem Empfangen der Registrierungsbestätigungsnachricht zu übermitteln.

## Revendications

1. Dispositif de réseau, comprenant :
au moins une mémoire ; et
au moins un processeur couplé à la au moins une mémoire et configuré pour amener le dispositif de réseau à :
communiquer avec un équipement utilisateur, UE, via une première fonction de réseau comprenant une fonction de serveur d'authentification (AUSF) ;
recevoir une demande d'authentification en provenance de la première fonction de réseau ;
sélectionner un serveur de provisionnement sur la base d'un ou plusieurs éléments parmi une identité d'UE d'un profil d'intégration ou une préconfiguration ; et
transmettre un message de réponse à la première fonction de réseau pour le transférer à l'UE via une seconde fonction de réseau comprenant une fonction de gestion des accès et de la mobilité, dans lequel le message de réponse comprend une adresse du serveur de provisionnement ;
dans lequel le dispositif de réseau comprend un serveur d'identifiants par défaut (DCS) et est configuré pour fonctionner en association avec un réseau non public autonome (SNPN).

2. Dispositif de réseau selon la revendication 1, dans lequel le au moins un processeur est configuré pour amener le dispositif de réseau à dériver une clé de provisionnement (K_{Pro}) selon une fonction de dérivation de clés (KDF), dans laquelle une clé de session principale (MSK) et un identifiant d'équipement permanent (PEI) de l'UE constituent des entrées de la KDF.

3. Dispositif de réseau selon la revendication 2, dans lequel le au moins un processeur est configuré pour amener le dispositif de réseau à transmettre un message de clé de provisionnement au serveur de provisionnement, dans lequel le message de clé de provisionnement comprend le K_{Pro} et un identifiant permanent d'abonnement (SUPI) d'intégration.

4. Dispositif de réseau selon la revendication 3, dans lequel le au moins un processeur est configuré pour amener le dispositif de réseau à recevoir un message de réponse en provenance du serveur de provisionnement sur la base du message de clé de provisionnement.

5. Dispositif de réseau selon la revendication 4, dans lequel le au moins un processeur est configuré pour amener le dispositif de réseau à
vérifier la réussite d'un provisionnement ; et
désactiver ou supprimer un profil d'intégration lié à l'identifiant permanent d'abonnement (SUPI) d'intégration.

6. Procédé destiné à un dispositif de réseau, le dispositif de réseau comprenant un serveur d'identifiants par défaut (DCS) configuré pour fonctionner en association avec un réseau non public autonome (SNPN), le procédé comprenant :
la communication avec un UE via une première fonction de réseau comprenant une fonction de serveur d'authentification (AUSF) ;
la réception d'une demande d'authentification en provenance de la première fonction de réseau ;
la sélection d'un serveur de provisionnement sur la base d'un ou plusieurs éléments parmi une identité d'UE d'un profil d'intégration ou une préconfiguration ; et
la transmission d'un message de réponse à la première fonction de réseau pour le transférer à l'UE via une seconde fonction de réseau comprenant une fonction de gestion des accès et de la mobilité (AMF), dans lequel le message de réponse comprend une adresse du serveur de provisionnement.

7. Équipement utilisateur (UE) configuré pour fonctionner en association avec un réseau non public autonome (SNPN), comprenant :
au moins une mémoire ; et
au moins un processeur couplé à la au moins une mémoire et configuré pour amener l'UE à :
communiquer avec une première fonction de réseau ;
recevoir d'une fonction de gestion des accès et de la mobilité un message d'acceptation d'enregistrement comprenant une adresse de serveur de provisionnement ; et
dériver une clé de provisionnement (K_{Pro}) selon une KDF, dans lequel une MSK et un PEI de l'UE constituent des entrées de la KDF.

8. UE selon la revendication 7, dans lequel le au moins un processeur est configuré pour amener l'UE à communiquer avec une seconde fonction de réseau afin d'établir un tunnel de sécurité au protocole Internet (IP) (IPSec) en utilisant le K_{Pro}, dans lequel la seconde fonction de réseau comprend un serveur de provisionnement.

9. UE selon la revendication 7 ou 8, dans lequel la première fonction de réseau comprend une fonction de gestion des accès et de la mobilité.

10. UE selon la revendication 7, 8 ou 9, dans lequel le au moins un processeur est configuré pour amener l'UE à transmettre un message de demande d'enregistrement avant de recevoir le message d'acceptation d'enregistrement.
